# EUROPÄISCHE PATENTSCHRIFT

(11) **EP 0 978 229 B1**
(45) Veröffentlichungstag und Bekanntmachung des Hinweises auf die Patenterteilung: **09.10.2002**
(21) Anmeldenummer: 99113374.5
(22) Anmeldetag: 10.07.1999
(51) Int. Cl.: A01F 15/08, G01G 19/12

(54) **Verfahren und Vorrichtung zur Ermitttlung der Gewichtskraft von Ballen**
Method and device for determining the weight of a bale
Procédé et appareil pour déterminer le poids d'une balle

(30) Priorität: 04.08.1998 DE 19835163
(43) Veröffentlichungstag der Anmeldung: 09.02.2000
(73) Patentinhaber: Case Harvesting Systems GmbH, 01844 Neustadt (DE)
(72) Erfinder: Gottlöber, Dietrich, Dipl.-Ing, 01844 Neustadt (DE)
(74) Vertreter: Müller, Lutz

(56) Entgegenhaltungen:
- DE-A- 4 436 128
- DE-A- 19 543 343
- US-A- 2 982 201
- US-A- 5 384 436
- US-A- 5 742 010

## Beschreibung

Die Erfindung betrifft ein Verfahren und eine Vorrichtung zur Ermittlung der Gewichtskraft von Ballen in einer Ballenpresse, insbesondere in einer Großballenpresse und vorzugsweise während der Ballenbildung, mit den Merkmalen nach den Oberbegriffen der Patentansprüche 1 und 7. Die erfindungsgemäßen Ballenpressen werden beispielsweise in der Landwirtschaft eingesetzt.

Von den zu verpressenden landwirtschaftlichen Erntegütern dient z. B. Stroh einmal als Düngergrundlage für landwirtschaftlich und gärtnerisch genutzte Flächen oder als Einstreu in der Tierhaltung. Zum anderen wird es heute auch in ganz erheblichem Maße einer industriellen Verwertung zur Herstellung anderweitiger Produkte, wie zum Beispiel für Verpackungsmaterial, Füllstoffe, Dämmstoffe etc. zugeführt.

Zunehmend werden auch Heu und Welkgut für die Bevorratung und für Silage zu Großballen verpreßt, die eine effektivere Bewirtschaftung in der Tierhaltung gestatten. Durch die Herstellung von quaderförmigen Großballen mit Hilfe von Großballenpressen können außerdem die vorhandenen Transportkapazitäten und die Lagerräume in den landwirtschaftlichen Betrieben rationeller und kostengünstiger genutzt werden.

Für den Produzenten, den Endverbraucher und den Finalproduzenten ist demzufolge nicht nur die tägliche Arbeitsleistung einer sich im Einsatz befindlichen Ballenpresse von Bedeutung, sondern auch die genaue Kenntnis der gesamten Gewichtskraft der verpreßten Ballen, die Gewichtskraft jedes einzelnen Ballens und die Stückzahl der gepreßten Ballen, da diese oftmals direkt vom Feld oder der Wiese an die jeweiligen Abnehmer oder Verbraucher geliefert werden. Deshalb bedarf es eines geeigneten Verfahrens und einer Vorrichtung zur zuverlässigen Ermittlung der Gewichtskraft von Ballen.

In der eine Lösungsmöglichkeit zur Ermittlung der Ertragskartierung beim Einsatz landwirtschaftlicher Ballenpressen aufzeigenden DE 195 43 343 A1 sind gleich mehrere Ausführungsbeispiele von Wägevorrichtungen von Ballen enthalten, weil das dafür eine der wichtigsten Ausgangsgrößen neben der ständigen Positionsbestimmung der Ballenpresse ist. Dazu wird einmal vorgeschlagen, an der Abstützung am Ende des Preßkanals einen Drucksensor anzubringen, der die Gewichtskraft des sich am Ausgang des Preßkanals befindlichen Ballens ermittelt. Diese Wägung ist äußerst ungenau, da der Preßkanal aus Stabilitätsgründen sehr formstabil ausgebildet sein muß, so daß das relativ geringe Gewicht eines Ballens nicht eine solche elastische Verformung erzeugen kann und darf, die einen brauchbaren Meßwert für die Gewichtskraft eines einzelnen Ballens darstellen könnte. Außerdem stellt ein an dieser Stelle gemessener Wert immer die Summe der Gewichtskraft des Ballens und der Teile des Preßkanals in diesem Bereich dar, so daß der relative Fehler für den Ballen noch größer wird. Es bleibt auch völlig offen, wie die Gewichtskraft eines einzelnen Ballens mit dieser Methode festgestellt werden kann, wenn dessen Länge bekanntlich in Größenordnungen variierbar ist.

Weitere Möglichkeiten zur Feststellung der Gewichtskraft von Ballen werden darin gesehen, an der Anhängevorrichtung einen Drucksensor vorzusehen, der die sich verändernde Stützlast während der Ballenbildung mißt, mit der sich die Ballenpresse an der Anhängevorrichtung abstützt. Analog zu bewerten ist die Anbringung von Gewichtssensoren am Fahrwerk der Ballenpresse, die das Gewicht der gesamten Ballenpresse an der Achse über der Zeit messen. Bei beiden Möglichkeiten wird es für notwendig angesehen, die Meßwerte mit geeigneter Sensorik von Störeinflüssen aus horizontalen und vertikalen Beschleunigungen der Ballenpresse bzw. aus Hanglagen bei der Fahrt der Ballenpresse zu befreien oder durch Mittelwertbildung aus mehreren kurz aufeinanderfolgenden Messungen die Meßwerte zu glätten. Auch diese Möglichkeiten zur Feststellung der Gewichtskraft einzelner Ballen sind äußerst ungenau, da neben der Gewichtskraft des einzelnen Ballens entweder das gesamte Gewicht der Ballenpresse bei der Messung an der Achse bzw. der Stützlastanteil der Ballenpresse ohne Ballen an der Anhängevorrichtung immer mit gemessen werden. Vergegenwärtigt man sich, daß ein durchschnittlich schwerer Ballen etwa nur ein Zwanzigstel des Gesamtgewichtes der leeren Ballenpresse aufbringt, liegt die Meßwertveränderung an der Achse durch einen neu gebildeten Ballen beinahe im Toleranzbereich des Meßwertes für das gesamte Gewicht der Ballenpresse, wenn man dieses während der Fahrt unter dem Einfluß vorstehender Störeinflüsse mißt. Beim Messen der Stützlast an der Anhängevorrichtung sind die Verhältnisse zwar etwas günstiger, aber dennoch zur Feststellung der Gewichtskraft für einen einzelnen Ballen immer noch viel zu ungenau. Daran kann auch das genannte Verringern der Störeinflüsse mit geeigneter Sensorik oder eine Mittelwertbildung durch kurz aufeinanderfolgende Messungen nichts wesentlich ändern.

Schließlich wird in der DE 195 43 343 A1 zur Feststellung der Gewichtskraft eines einzelnen Ballens vorgeschlagen, die Gewichtsentlastung der Ballenpresse direkt nach der Abgabe des Ballens auf das Feld zu messen, wobei der gemessene Gewichtsentlastungswert dem Gewicht des abgeworfenen Ballens entsprechen soll. Da hierzu jedoch auch nur die Druck- bzw. Gewichtssensoren an der Anhängevorrichtung bzw. der Achse der Ballenpresse zum Einsatz kommen sollen, sind diese Meßwerte genauso ungenau wie bei den beiden vorstehend beschriebenen Möglichkeiten.

Als weiterer Stand der Technik ist zur Ermittlung der Gewichtskraft von Ballen mit der DE 44 36 128 A 1 eine Wägeeinrichtung bekannt geworden, die in die an Ballenpressen übliche Laderutsche zur Ablage der Ballen auf dem Feld integriert ist. Dazu besteht die Laderutsche aus einem annähernd vertikal ausgerichteten Tragrahmen, der mittels oberer und unterer Lenker am hinteren Ende des Preßkanals befestigt ist. Sein an ihm starr befestigter Rahmen erstreckt sich als Verlängerung des Preßkanalbodens in Fahrtrichtung gesehen nach hinten und dient zur Auflage eines kompletten Ballens, bevor dieser auf dem Feld abgelegt wird. Hat ein Ballen diese Position erreicht, lenkt seine Gewichtskraft die gesamte Laderutsche mit dem Ballen durch eine Schwenkbewegung genannter Lenker aus einer horizontalen Ebene aus. Diese Schwenkbewegung wird zur Meßwertgewinnung genutzt, da sich der Tragrahmen der Laderutsche auf einem Meßwertgeber abstützt, der mittels einer Halterung starr am Ende des Preßkanals angebracht ist. Der Meßwertgeber ist über einen Sensor mit einer Steuerund Rechnereinheit verbunden, die wiederum mit einer Anzeigeeinheit zur wahlweisen Anzeige für die Gesamtgewichtskraft der Ballen, für die Gewichtskraft der einzelnen Ballen und für die in der Tagesleistung gepreßte Ballenstückzahl in Verbindung steht.

Nachteilig an dieser Wägeeinrichtung ist einmal, daß eine Messung der Gewichtskraft der einzelnen Ballen während der Fahrt nicht möglich ist, da keine Mittel zur Dämpfung von Störeinflüssen aus horizontalen und vertikalen Beschleunigungen der Ballenpresse sowie aus in der Ballenpresse erzeugten Schwingungen vorgesehen sind. Deshalb muß die Ballenpresse zur Ermittlung akzeptabler Werte stehen bleiben und gegebenenfalls sogar der Antrieb abgeschaltet werden. Das schmälert natürlich die Einsatzzeit und damit die Effektivität der Ballenpresse in unzumutbarer Weise. Zum anderen sind die auf das Wägesystem selbst zurückzuführenden Meßungenauigkeiten zu bemängeln, da jede Art mechanischer Übertragungsmittel in Meßsystemen durch die harten Einsatzbedingungen einer Landmaschine selbst zur Fehlerquelle werden. Außerdem sind mechanische Übertragungsmittel stets mit einem hohen Herstellungsaufwand und damit auch mit hohen Kosten verbunden. Schließlich ist noch von Nachteil, daß diese Wägeeinrichtung nur in einer als Rollenrutsche ausgebildeten Laderutsche einsetzbar ist, da sich der Ballen zur Wägung vom noch sich im Preßkanal befindenden Ballen ein Stück entfernen muß. Diese Gleiteigenschaften haben herkömmliche Laderutschen nicht, so daß das vordere Ende des nachfolgenden Ballens durch Anliegen am zu wiegenden Ballen das Meßergebnis verfälschen würde.

Deshalb liegt der Erfindung die Aufgabe zugrunde, ein Verfahren und eine Vorrichtung zur Ermittlung der Gewichtskraft von Ballen in einer Ballenpresse zu schaffen, die exakte Meßwerte bei ununterbrochener Fahrt der Ballenpresse liefert, bei der nur unempfindliche Meßmittel gegenüber den harten Einsatzbedingungen in der Landwirtshaft zum Einsatz kommen, daß die Meßmittel kostengünstig herstellbar sind und die sowohl an einer Rollenschurre als auch an einer herkömmlichen Laderutsche einsetzbar sind.

Diese Aufgabe wird durch die Verfahrensschritte nach dem Patentanspruch 1 und den Gegenstand des vorrichtungsbezogenen Patentanspruchs 7 gelöst, wobei in den darauf bezogenen Unteransprüchen Merkmale aufgeführt sind, die diese Lösung in vorteilhafter Weise weiterentwickeln und auf die hier deshalb ausdrücklich verwiesen wird.

Durch das kontinuierliche Messen der vom Ballen auf die Laderutsche ausgeübten Gewichtskräfte, d. h. ausschließlich in der vertikalen Ebene wirkende Gewichtskräfte, werden diese unter dem Einfluß positiver oder negativer Beschleunigungen in ihrer tatsächlichen Größe mit sich ständig verändernder Amplitude erfaßt. Diese Beschleunigungen entstehen durch die Fahrt der Ballenpresse beim Überfahren von Bodenunebenheiten.

Die Messung dieser Gewichtskräfte lediglich im Endbereich der Laderutsche hat zur Folge, daß beim Erreichen der Vorderfront jedes sich in der Vorwärtsbewegung befindenden Ballens von Null abweichende Meßwerte entstehen.

Diese Gewichtskraftwerte steigen deutlich sichtbar mit dem Weiterrücken des gesamten Ballenstranges an, wobei das Hinzufügen jedes neuen Preßpaketes als Sprung in einer aus diesen Meßwerten aufgezeichneten Kurve zu sehen ist. Das steigert sich solange, bis sich der Schwerpunkt "S" jedes Ballens genau über dem Endbereich der Laderutsche befindet. In diesem Augenblick des Abkippens der Ballen drücken allein deren gesamte Gewichtskräfte und evtl. vorhandene Beschleunigungskräfte auf den Endbereich, was auf direktem Wege durch den Gewichtssensor aufgenommen wird. Diese Gewichts- und Beschleunigungskräfte werden dann einem Mikroprozessor zugeführt, der ständig Mittelwerte errechnet und speichert. Diese Mittelwerte verkörpern den tatsächlichen Gewichtskraftverlauf, da sich die Beschleunigungswerte gegeneinander ausgleichen. Schließlich wird dann durch den Mikroprozessor der maximale Mittelwert jedes fertig gebundenen Ballens errechnet und gespeichert, was der tatsächlichen Gewichtskraft der Ballen entspricht.

Dabei hat es sich als zweckmäßig erwiesen, nach der ersten Mittelwertbildung weitere folgen zu lassen, um diese Kurve noch weiter zu glätten und damit die Meßgenauigkeit zu erhöhen. Ebenso hat es sich bewährt, die Gewichtskräfte direkt an der Abkippkante der Laderutsche zu messen, wodurch der Augenblick des Abkippens besser erfaßbar ist.

In einer bevorzugten Ausführungsvariante kann an der Ballenpresse ein Lagesensor angebracht sein, der die Abweichung der Ballenpresse aus der normalen Arbeitsposition ebenfalls infolge des Überfahrens von Bodenunebenheiten aufnimmt und bei Abweichungen auf den Mikropozessor direkt Einfluß nimmt, damit dieser trotzdem die tatsächlichen Gewichtskräfte errechnet.

Weiterhin würde es sich anbieten, die Messung der Gewichtskräfte zeitlich limitiert auf einen Bereich vor und nach dem Erreichen des maximalen Mittelwertes zu beschränken, weil es ja eigentlich nur um diesen geht.

Sinnvoller Weise sollten die einzelnen maximalen Mittelwerte und deren Summe über eine vom Bediener zu bestimmende Zeitperiode einer Anzeigeeinrichtung zuführbar sein, so daß der Bediener das Gewicht jedes Ballens ständig verfolgen und am Ende die Gesamtgewichtskräfte aller Ballen ablesen kann.

Durch die Messung der Gewichtskräfte der Ballen in der erfindungsgemäßen Wägeeinrichtung durch einen direkt im Endbereich der Laderutsche angeordneten Gewichtssensor wird einmal nur die Gewichtskraft jedes einzelnen Ballens allein gemessen, wenn man von den sich ausgleichenden Beschleunigungskräften während der Fahrt absieht. Zum anderen erübrigen sich dadurch irgendwelche Übertragungsmittel für die Meßwerte, die deren Genauigkeit nur negativ beeinflussen würden, wenn die Meßstelle woanders angeordnet wäre.

Dabei hat es sich als zweckmäßig erwiesen, den Endbereich der Laderutsche über Biegeträger an ihren Seitenprofilen anzuschließen, die mit die Meßwerte liefernden Dehnmeßstreifen besetzt sind.

Anstelle der Laderutsche ist in dieser erfindungsgemäßen Wägevorrichtung auch eine Rollenschurre einsetzbar, bei der der die Meßwerte liefernde Endbereich wenigstens eine Rolle aufweist, über die der Ballen zur Ablage auf dem Feld unter vergleichbaren Bedingungen abkippen kann.

Die Vorteile dieses erfindungsgemäßen Verfahrens zur Ermittlung der Gewichtskraft von Ballen in einer Ballenpresse sowie der dazugehörigen Wägeeinrichtung sind, daß die Meßwerte einmal sehr genau sind und zum anderen bei ununterbrochener Fahrt der Ballenpresse aufgenommen werden können. Durch die Anordnung des Gewichtssensors an der richtigen Stelle in der Laderutsche entfallen störanfällige und hohe Herstellungskosten verursachende Übertragungsmittel, so daß auch aus diesem Grund die Wägeeinrichtung sehr exakte Meßwerte liefert und kostengünstig herstellbar ist. Sie ist außerdem mit dem gleichen Erfolg an einer Laderutsche und einer Rollenschurre einsetzbar.

Die Erfindung soll nun anhand eines Ausführungsbeispiels näher erläutert werden, wobei die einzelnen Figuren zeigen:
- Fig. 1:: die Seitenansicht einer Ballenpresse mit einem Ballen auf der Rollenrutsche im Augenblick der Wägung seiner maximalen Gewichtskraft,
- Fig. 2:: eine vergrößerte Darstellung einer Rollenschurre mit Ballen im gleichen Augenblick wie in Fig. 1,
- Fig. 3:: einen Meßschrieb mit den Kurven der Gewichtskräfte G1 und der errechneten Mittelwerte M1 während der Vorwärtsbewegung eines Ballens auf der Rollenschurre vom Auftreffen seines vorderen Endes auf deren Endbereich bis zur Ablage auf dem Feld.

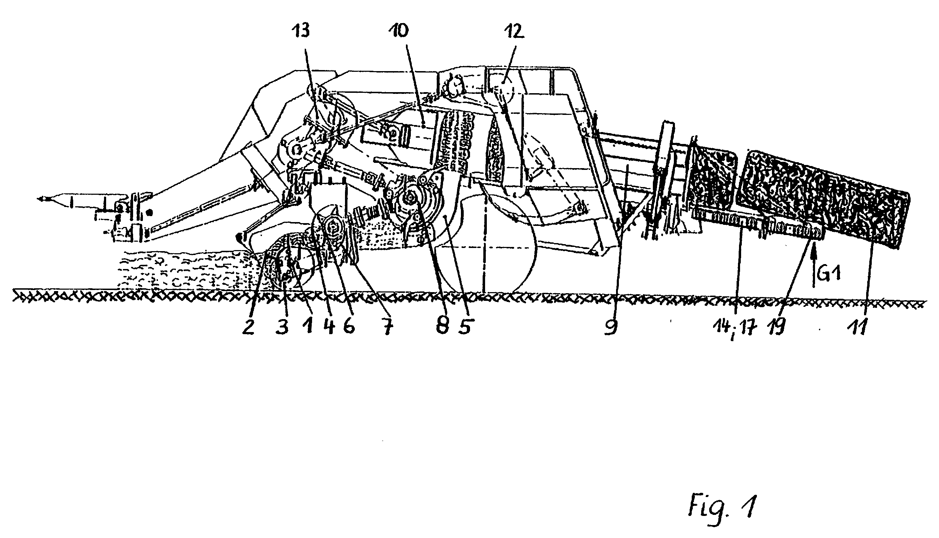

In Figur 1 ist eine Ballenpresse in der Seitenansicht mit teilweise weggelassener Verkleidung zum Erkennen der wichtigsten Funktionsorgane gezeigt. Sie ist an ihrer Frontseite mit einer breiten Pick-up 1 ausgestattet, die das im Schwad liegende Erntegut mit ihren Zinken 2 vom Erdboden aufnimmt, wobei sie mit Laufrädern 3 geführt wird. Über und hinter ihr ist links und rechts je ein Querförderschneckenstück 4 zum Zusammenführen des Erntegutes auf die Breite des nachfolgenden Zuführkanals 5 angeordnet. In diesem Bereich befindet sich noch ein Schneidrotor 6, der mit einschwenkbaren Schneidmessern 7 zusammenarbeitet, um das Erntegut in Stücke zu schneiden. Der Zuführkanal 5 wird von einem Förderrotor 8 mit Erntegut befüllt und danach in einem Hub in den Preßkanal 9 entleert. Dort wird es durch den Preßkolben 10 im Strangpreßverfahren zu Ballen 11 verpreßt, die durch eine Bindeeinrichtung 12 mit mehreren Lagen Bindegarn zusammengebunden werden. Der Antrieb sämtlicher Funktionsorgane erfolgt von einem Hauptgetriebe 13 aus, das vom Zapfwellenanschluß eines nicht dargestellten Traktors aus angetrieben wird.

An das hintere Ende des Preßkanals 9 ist eine Rollenschurre 14 so angebaut, daß sie die Verlängerung des Bodens des Preßkanals 9 darstellt. Die Ballen 11 werden von den Rollen 15 der Rollenschurre 14 solange getragen, bis sie durch Abkippen über die als Abkippkante 16 dienende letzte Rolle 15 auf das Feld fallen. Die Rollenschurre 14 könnte auch problemlos durch eine aus Profilen bestehende Laderutsche 17 ersetzt werden, ohne daß das negative Auswirkungen auf das Messen der Gewichtskräfte G1 haben würde.

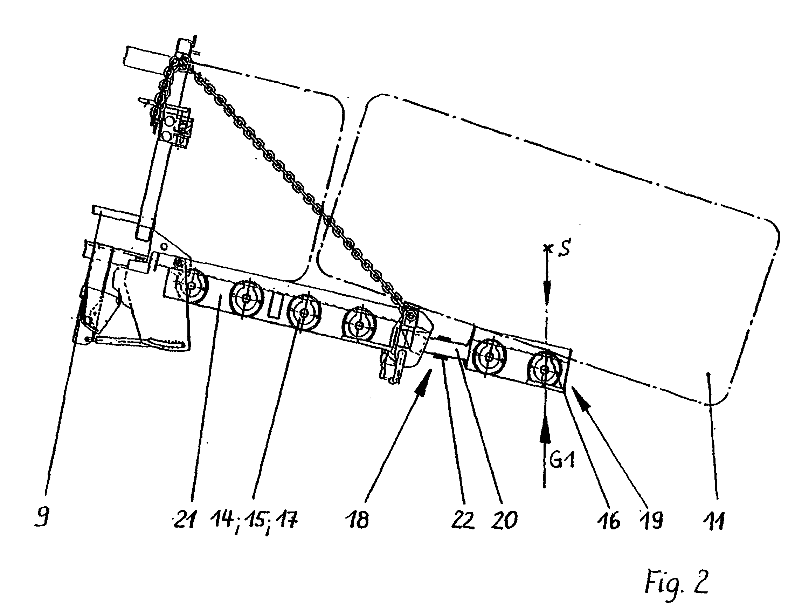

In Figur 2 ist eine mögliche Ausführung eines Gewichtssensors 18 zu sehen, wobei der Endbereich 19 der Rollenschurre 14 beidseitig über Biegeträger 20 an deren Seitenprofilen 21 befestigt ist. An ihnen sind Dehnmeßstreifen 22 zur Ermittlung der Durchbiegung unter der Einwirkung der Gewichtskräfte G1 vorgesehen.

Die Meßwerte der Gewichtskräfte G1 werden einem nicht dargestellten Mikroprozessor zugeleitet und von diesem an eine ebenfalls nicht dargestellte Anzeigeeinrichtung weitergegeben.

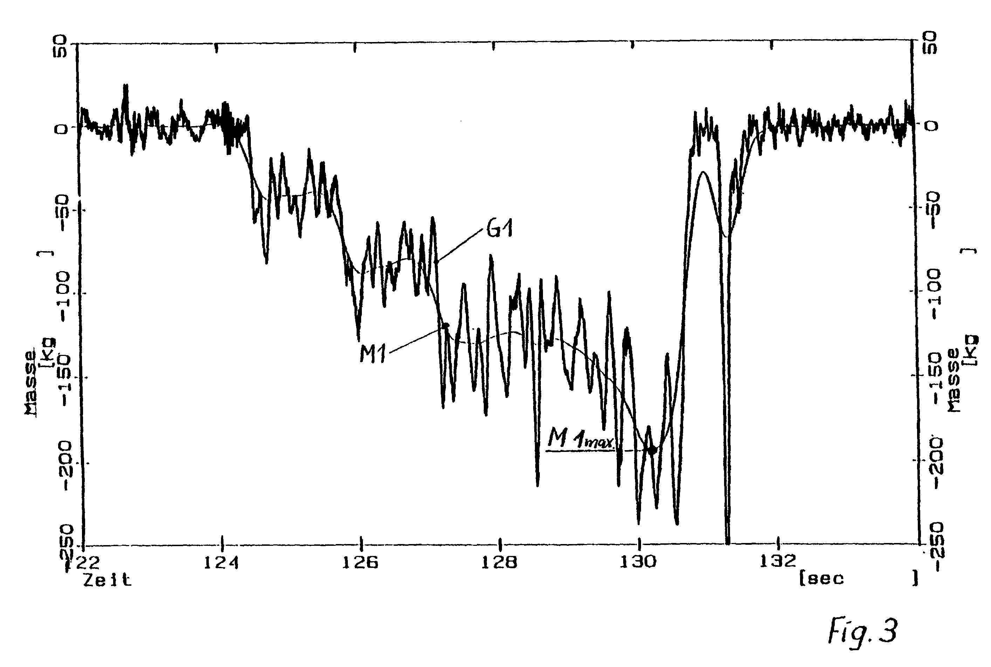

In Figur 3 ist einmal der Kurvenverlauf der durch äußere Einflüsse sich ändernde Gewichtskraftverlauf G1 aufgetragen. Genannter Mikroprozessor errechnet daraus dann die Mittelwerte M1, wobei der Mittelwert M1ₘₐₓ der tatsächlichen Gewichtskraft eines fertigen Ballens 11 entspricht. Sowohl jeder die tatsächliche Gewichtskraft eines Ballens 11 verkörpernde maximale Mittelwert M1ₘₐₓ als auch deren Summe können über eine vorwählbare Zeitperiode auf der Anzeigeeinrichtung abgelesen werden.

### Bezugszeichenaufstellung

- 1: Pick-up
- 2: Zinken
- 3: Laufrad
- 4: Querförderschneckenstück
- 5: Zuführkanal
- 6: Schneidrotor
- 7: Schneidmesser
- 8: Förderrotor
- 9: Preßkanal
- 10: Preßkolben
- 11: Ballen
- 12: Bindeeinrichtung
- 13: Hauptgetriebe
- 14: Rollenschurre
- 15: Rolle
- 16: Abkippkante
- 17: Laderutsche
- 18: Gewichtssensor
- 19: Endbereich
- 20: Biegeträger
- 21: Seitenprofile
- 22: Dehnmeßstreifen
- G1: Gewichtskräfte
- M1: Mittelwerte
- M1ₘₐₓ: maximaler Mittelwert

## Patentansprüche

1. Verfahren zur Ermittlung der Gewichtskraft von Ballen in einer sich an das Ende des Preßkanals einer Ballenpresse anschließenden Laderutsche, insbesondere einer Großballenpresse zur Herstellung quaderförmiger Ballen aus landwirtschaftlichen Erntegütern, wobei das Verfahren durch folgende Schritte **gekennzeichnet** ist,
a) kontinuierliches Messen der vom Ballen (11) auf den Endbereich (19) der Laderutsche (17) einwirkenden Gewichtskräfte (G1) mittels Gewichtssensor (18) während seiner Vorwärtsbewegung auf der Laderutsche (17) bis zu deren Verlassen,
b) kontinuierliche Zuführung der Meßwerte der Gewichtskräfte (G1) an einen Mikroprozessor zur Errechnung und Speicherung der Mittelwerte (M1) für die Gewichtskräfte (G1),
c) Errechnung und Speicherung des maximalen Mittelwertes (M1ₘₐₓ) als Maß für die tatsächliche Gewichtskraft eines fertig gebundenen Ballens (11).

2. Verfahren nach Anspruch 1, **dadurch gekennzeichnet, daß** die tatsächliche Gewichtskraft eines fertig gebundenen Ballens (11) durch mehrfach nacheinander durchgeführte Errechnung und Speicherung der Mittelwerte (M1', M1'', M1''') und deren Maxima (M1'ₘₐₓ, M1''ₘₐₓ, M1'''ₘₐₓ) festgestellt wird.

3. Verfahren nach den Ansprüchen 1 und 2, **dadurch gekennzeichnet, daß** die Gewichtskräfte (G1) direkt an der Abkippkante (16) im Endbereich (19) der Laderutsche (17) gemessen werden.

4. Verfahren nach den Ansprüchen 1 bis 3, **dadurch gekennzeichnet, daß** der Gewichtssensor (18) die Gewichtskräfte (G1) in der normalen Arbeitsposition der Ballenpresse in einer vertikalen Ausrichtung als die tatsächlichen Gewichtskräfte (G1) mißt und daß beim Abweichen der Ballenpresse aus dieser normalen Arbeitsposition ein Lagesensor auf die Umrechnung der dadurch verfälschten Meßwerte im Mikroprozessor in die tatsächlichen Gewichtskräfte (G1) Einfluß nimmt.

5. Verfahren nach den Ansprüchen 1 bis 4, **dadurch gekennzeichnet, daß** die Messung der vom Ballen (11) auf den Endbereich (19) der Laderutsche (17) einwirkenden Gewichtskräfte (G1) zeitlich limitiert in einen Bereich etwas vor und nach Erreichen des maximalen Mittelwertes (M1ₘₐₓ) durchgeführt wird.

6. Verfahren nach den Ansprüchen 1 bis 5, **dadurch gekennzeichnet, daß** die einzelnen maximalen Mittelwerte (M1ₘₐₓ) und deren Summe in einer vom Bediener zu bestimmenden Zeitperiode einer Anzeigeeinrichtung zur wahlweisen Anzeige zugeführt werden.

7. Vorrichtung zur Ermittlung der Gewichtskraft von gepreßten Ballen, vorzugsweise für Großballenpressen zur Herstellung quaderförmiger Ballen aus landwirtschaftlichen Erntegütern, mit einer am hinteren Ende des Preßkanals angebrachten und die Verlängerung seines Bodens darstellenden Laderutsche und einem die Gewichtskraft jedes einzelnen Ballens messenden Gewichtssensor, **dadurch gekennzeichnet, daß**
a) im Endbereich (19) der Laderutsche (17) ein die Gewichtskräfte (G1) eines sich in die Ablageposition bewegenden Ballens (11) direkt messender Gewichtssensor (18) angeordnet ist,
b) der Gewichtssensor (18) mit einem aus den Gewichtskräften (G1) ständig Mittelwerte (M1) errechnenden, diese Mittelwerte (M1) speichernden und den maximalen Mittelwert (M1ₘₐₓ) feststellenden Mikroprozessor verbunden ist.

8. Vorrichtung nach Anspruch 7, **dadurch gekennzeichnet, daß** der Endbereich der Laderutsche (17) über mit Dehnmeßstreifen (22) besetzte Biegeträger (20) an der Laderutsche (17) befestigt ist.

9. Vorrichtung nach den Ansprüchen 7 und 8, **dadurch gekennzeichnet, daß** die Laderutsche (17) als Rollenschurre (14) ausgebildet ist.

10. Vorrichtung nach den Ansprüchen 7 bis 9, **dadurch gekennzeichnet, daß** der Endbereich (19) der Rollenschurre (14) wenigstens mit einer Rolle (15) ausgestattet ist.

## Claims

1. A process for determining the weight of bales in a loading chute located at the end of the pressing channel of a baling press, in particular a large baling press for the production of rectangular bales from agricultural harvested crops, in which the process is **characterised by** the following steps,
a) continuous measuring of the weights (G1) exerted by the bales (11) acting on the end zone (19) of the loading chute (17) by means of a weight sensor (18) during their forward movement on the loading chute (17) until they leave it,
b) continuous feeding of the measured values of the weights (G1) to a microprocessor for calculating and storing the mean value (M1) for the weights (G1),
c) calculation and storage of the maximum mean value (M1ₘₐₓ) as a measure for the actual weight of a finished bound bale (11).

2. A process in accordance with claim 1, **characterised in that** the actual weight of a finished bound bale (11) is established by calculation and storage of the mean values (M1' M1", M1"') and their maxima (M1'ₘₐₓ, M1"ₘₐₓ, M1"'ₘₐₓ) performed many times sequentially.

3. A process in accordance with claims I and 2, **characterised in that** the weights (G1) are measured directly on the tipping out edge (16) in the end zone (19) of the loading chute (17).

4. A process in accordance with claims 1 to 3, **characterised in that** the weight sensor (18) measures the weights (G1) in the normal working position of the baling press in a vertical orientation as the actual weights (G1), and that on deviation of the baling press from this normal working position a position sensor influences the conversion of the measured values in the microprocessor falsified by this into the actual weights (G1

5. A process in accordance with claims 1 to 4, **characterised in that** measurement of the weights (G1) of the bales (11) acting on the end zone (19) of the loading chute (17) is performed limited in time in a range somewhat before and after attaining the maximum mean value (M1ₘₐₓ).

6. A process in accordance with claims 1 to 5, **characterised in that** the individual maximum values (M1ₘₐₓ) and their total in a period to be determined by the operator are fed to a displaying device for optional display.

7. A device for determining the weight of pressed bales, preferably for large baling presses for the production of rectangular bales from agricultural harvested crops, with a loading chute attached at the rear end, **characterised in that**
a) in the end zone (19) of the loading chute (17) a weight sensor (18) is arranged for directly measuring the weights (G1) of a bale (11) moving in the deposition position,
b) the weight sensor (18) is connected with a microprocessor for constantly calculating the mean value (M1) of the weights (G1) and for storing these mean values (M1) and for determining the maximum mean value (M1ₘₐₓ).

8. A device in accordance with claim 7, **characterised in that** the end zone of the loading chute (17) is fixed to the loading chute (17) via a flexible support (20) equipped with strain gauges (22).

9. A device in accordance with claims 7 and 8, **characterised in that** the loading chute (17) is formed as a roller chute (14).

10. A device in accordance with claims 7 to 9, **characterised in that** the end zone of the roller chute (14) is equipped with at least one roller (15).

## Revendications

1. Procédé pour la détermination du poids de balles dans une glissière de chargement qui se raccorde à l'extrémité du canal de compression d'une presse-balloteuse, en particulier une presse à grandes balles pour la confection de balles en forme de parallélépipède de produits de récolte agricoles, le procédé étant **caractérisé par** les étapes suivantes,
a) mesure continue des poids (G1) exercés par la balle (11) sur la section d'extrémité (19) de la glissière de chargement (17) au moyen d'un capteur de poids (18) pendant son avance sur la glissière de chargement (17) jusqu'à son départ de celle-ci,
b) transmission continue des valeurs de mesure des poids (G1) à un microprocesseur pour le calcul et la mémorisation des valeurs moyennes (M1) des poids (G1),
c) Calcul et mémorisation de la valeur moyenne maximale (M1ₘₐₓ) en tant que mesure du poids réel d'une balle dûment liée (11).

2. Procédé selon la revendication 1, **caractérisé en ce que** le poids réel d'une balle dûment liée (11) est défini par le calcul et la mémorisation, exécutés successivement à plusieurs reprises, des valeurs moyennes (M1', M1", M1"') et leurs maximas (M1'ₘₐₓ, M1"ₘₐₓ, M1"'ₘₐₓ).

3. Procédé selon les revendications 1 et 2, **caractérisé en ce que** les poids (G1) sont directement mesurés sur le bord de basculement (16) dans la zone d'extrémité (19) de la glissière de chargement (17).

4. Procédé selon les revendications 1 à 3, **caractérisé en ce que** le détecteur de poids (18) mesure les poids (G1) dans la position de travail normale de la presse-balloteuse dans une orientation verticale en tant que poids réels (G1) et **en ce que**, en cas d'écart de la presse par rapport à cette position de travail normale, un capteur de positions influence la conversion des valeurs de mesure ainsi faussée dans le microprocesseur en direction des poids réels (G1).

5. Procédé selon les revendications 1 à 4, **caractérisé en ce que** la mesure des poids (G1) exercés par la balle (11) sur la zone d'extrémité (19) de la goulotte de chargement (17) est limitée dans le temps dans un domaine qui se situe un peu avant et après l'atteinte de la valeur moyenne maximale (M1ₘₐₓ).

6. Procédé selon les revendications 1 à 5, **caractérisé en ce que** les valeurs moyennes maximales (M1ₘₐₓ) et leur somme sont transmises à un dispositif d'affichage pour un affichage au choix pendant une durée à définir par l'utilisateur.

7. Dispositif pour la détermination du poids de balles comprimées, préférentiellement pour des presses à grandes balles pour la confection de balles en forme de parallélépipède de produits de récolte agricoles, avec une glissière de chargement montée à l'extrémité arrière du canal de compression et représentant le prolongement de son fond, et un détecteur de poids mesurant le poids de chaque balle en particulier, **caractérisé en ce que**
a) dans la zone d'extrémité (19) de la glissière de chargement (17), un détecteur de poids mesurant directement les poids (18) d'une balle (11) qui se déplace dans la position de dépôt,
b) le capteur de poids (18) est relié à un microprocesseur qui calcule constamment les valeurs moyennes (M1) à partir des poids (G1), mémorise ces valeurs moyennes (M1) et détermine la valeur moyenne maximale (M1ₘₐₓ).

8. Dispositif selon la revendication 7, **caractérisé en ce que** la section d'extrémité de la glissière de chargement (17) est fixée à ladite glissière de chargement (17) via des supports flexibles (20) occupés par des extensiomètres (22).

9. Dispositif selon les revendications 7 et 8, **caractérisé en ce que** la glissière de chargement (17) a la forme d'une goulotte à rouleaux (14).

10. Dispositif selon les revendications 7 à 9, **caractérisé en ce que** la section d'extrémité (19) de la goulotte à rouleaux (14) est au moins équipée d'un rouleau (15).
